(19) Europäisches Patentamt
European Patent Office
Office européen des brevets

(11) EP 0 760 025 B1

(12) EUROPEAN PATENT SPECIFICATION

(45) Date of publication and mention
of the grant of the patent:
**28.08.2002 Bulletin 2002/35**

(51) Int Cl.$^7$: **D01F 1/10**, D01F 6/84,
D01F 6/62, D01F 6/60,
C08K 3/08, C08K 3/22,
A41D 19/015, A41D 31/00

(21) Application number: **95919087.7**

(22) Date of filing: **11.05.1995**

(86) International application number:
**PCT/US95/05778**

(87) International publication number:
**WO 95/031593 (23.11.1995 Gazette 1995/50)**

(54) **FILLED CUT-RESISTANT FIBER**

GEFÜLLTE SCHNITTFESTE FASER

FIBRE PLEINE RESISTANT AUX COUPURES

(84) Designated Contracting States:
**DE ES FR GB IE IT NL SE**

(30) Priority: **16.05.1994 US 243344**

(43) Date of publication of application:
**05.03.1997 Bulletin 1997/10**

(73) Proprietor: **Honeywell International, Inc.
Morristown, New Jersey 07962 (US)**

(72) Inventors:
• **SANDOR, Robert, B.**
**Cliffside Park, NJ 07010 (US)**
• **CARTER, Michelle, C.**
**Madison, NJ 07940 (US)**
• **GILLBERG-LaFORCE, Gunilla, E.**
**Roswell, GA 30076 (US)**
• **CLEAR, William, F.**
**Whitehouse Station, NJ 08889 (US)**

(74) Representative:
**von Kreisler, Alek, Dipl.-Chem. et al
Patentanwälte,
von Kreisler-Selting-Werner,
Bahnhofsvorplatz 1 (Deichmannhaus)
50667 Köln (DE)**

(56) References cited:
**EP-A- 0 376 323          EP-A- 0 599 231
WO-A-94/11549          WO-A-94/29499
US-A- 4 912 781          US-A- 5 179 912**

• **PATENT ABSTRACTS OF JAPAN vol. 018 no.
163 (C-1181) ,18 March 1994 & JP,A,05 331299
(TEIJIN LTD) 14 December 1993,**
• **CRC Handbook of Chemistry and Physics, 61st
ed. (1980-1981); CRC Press, Inc., Boca Raton, FL
33431 (US); p. B202-B207, F24**

**Description**

Field of the invention

This invention relates to a filled fiber having improved resistance to cutting.

Background of the Invention

Small amounts of particulate titanium dioxide can be used in polyester fiber as a delustrant. Also used in polyester fiber is a small amount of colloidal silicon dioxide, which is used to improve gloss. Magnetic materials have been incorporated into fibers to yield magnetic fibers. Examples include: cobalt/rare earth element intermetallics in thermoplastic fibers, as in published Japanese Patent Application No. 55/098909 (1980); cobalt/rare earth element intermetallics or strontium ferrite in core-sheath fibers, described in published Japanese Patent Application No. 3-130413 (1991); and magnetic materials in thermoplastic polymers, described in Polish Patent No. 251,452 and also in K. Turek et al., J. Magn. Magn. Mater. (1990), 83 (1-3), pp. 279-280.

Various kinds of gloves have been made in which metal has been included in the fabrication of the glove to impart protective qualities to the glove. For example, U.S. Patent Nos. 2,328,105 and 3,185,751 teach that a flexible, X-ray shield glove may be made by treating sheets of a suitable porous material with a finely divided, heavy metal which may be lead, barium, bismuth or tungsten, or may be made from a latex or dispersion containing heavy metal particles. As illustrated by U.S. Patent No. 5,020,161, gloves providing protection against corrosive liquids have been made with a metal film layer.

Cut-resistant gloves are beneficially utilized in the meat-packing industry and in automotive applications. As indicated by U.S. Patent Nos. 4,004,295, 4,384,449 and 4,470,251, and by EP 458,343, gloves providing cut resistance have been made from yarn which includes flexible metal wire or which consists of high tensile strength fibers.

A drawback with gloves made from yarn that includes flexible metal wire is hand fatigue with resultant deceased productivity and increased likelihood of injury. Moreover, with extended wear and flexing, the wire may fatigue and break, causing cuts and abrasions to the hands. In addition, the wire will act as a heat sink when a laundered glove is dried at elevated temperatures, which may reduce tensile strength of other yarn fiber, thereby decreasing glove protection and glove life.

Improved flexibility and uncomplicated laundering are desirable in cut-resistant, protective apparel. Therefore, there is a need for a flexible, high tensile strength, cut-resistant fiber that retains its properties when routinely laundered and that resists flexural fatigue. Such a fiber may be advantageously used in making protective apparel, in particular highly flexible, cut-resistant gloves.

Summary of the Invention

A cut-resistant fiber is made from a non-elastic fiber-forming isotropic semicrystalline polymer by including a hard filler distributed uniformly in the fiber. The hard filler has a Mohs Hardness value greater than 3, is selected from the group consisting, of a powder having an average diameter less than 20 micrometers, an elongated particle having an average length less than 20 micrometers, and mixtures thereof, and is present in an amount of 0.05% to 20% by weight. Said filler is included in sufficient amount to increase the cut resistance of said fiber by at least 10% as measured by the Ashland Cut Protection Performance Test compared with a fiber comprising said polymer without said filler. The fiber has improved cut resistance properties compared with the same fiber without the hard filler. A method of making cut-resistant fabric is also taught. In this method, a uniform blend of the above fiber-forming polymer and 0.05% to 20% by weight of said hard filler having a Mohs Hardness value greater than 3 is made. The uniform blend is spun into a fiber or yarn, which is then fabricated into fabric having said improved cut resistance in comparison with fabric made from the same fiber-forming polymer without the hard filler. The cut-resistant fabric may optionally also include other polymeric fibers and/or reinforcing inorganic fibers, which may be ceramic, metal or glass.

Detailed Description of the Invention

As indicated above, a flexible cut-resistant fiber useful for the manufacture of protective apparel may be produced when a hard filler is included in the fiber. The fiber may be made of any fiber-forming polymer, and may be produced by any of the methods normally used in making fibers. The polymer preferably is melt processable, in which case, the cut-resistant fiber is typically made by melt spinning. For polymers that cannot be spun into fibers in the melt, wet spinning and dry spinning may also be used to produce fibers having improved cut resistance.

In one preferred embodiment of this invention, the fiber-forming polymer is an isotropic non-elastic semicrystalline polymer. Preferably, the semi-crystalline polymer is melt processable; i.e., it melts in a temperature range which makes it possible to spin the polymer into fibers in the melt phase without significant decomposition. Semi-crystalline polymers that will be highly useful include poly(alkylene terephthalates), poly(alkylene naphthalates), polyfarylene sulfides), aliphatic and aliphatic-aromatic polyamides, and polyesters comprising monomer units derived from cyclohexanedimethanol and terephthalic acid. Examples of specific semi-crystalline polymers include polyethylene terephthalate), poly(butylene terephthalate), poly(ethylene naphthalate), poly(phenylene sulfide), poly(1,4-cyclohexanedimethanol terephthalate), wherein the 1,4-cyclohexanedimethanol is a mixture of cis and trans isomers, nylon-6 and nylon-66. The preferred semi-crystalline isotropic polymer is poly(ethylene terephthalate). Isotropic polymers that cannot be processed in the melt can also be used, as for example rayon, which is typically dry spun using acetone as a solvent, and poly [2,2'-(m-phenylene)-5,5'-bibenzimidazole], generally referred to as polybenzimidazole, which is typically wet spun using N,N'-dimethylacetamide as a solvent.

An important aspect of this invention is the discovery that a flexible, flexural fatigue-resistant and cut-resistant fiber may be made from a suitable polymer filled with a hard material that imparts cut resistance. The material may be a metal, such as an elemental metal or metal alloy, or may be nonmetallic. Generally, any filler may be used that has a Mohs Hardness value of 3 or more. Particularly suitable fillers have a Mohs Hardness value greater than 4 and preferably greater than 5. Iron, steel, tungsten and nickel are illustrative of metals and metal alloys, with tungsten, which has a Mohs value ranging from 6.5 to 7.5 being preferred. Non-metallic materials are also useful. These include, but are not limited to, metal oxides, such as aluminum oxide, metal carbides, such as tungsten carbide, metal nitrides, metal sulfides, metal silicates, metal silicides, metal sulfates, metal phosphates, and metal borides. Other ceramic materials may also be used. Titanium dioxide and silicon dioxide are less preferred in semi-crystalline polymers.

A particulate form of the filler may be used, with a powder form being generally suitable. Selection of an appropriate particle size depends on the processing and on the fiber diameter. The filler particles should be small enough to easily pass through the spinneret apertures. The particles should also be small enough that the fiber tensile properties do not appreciably deteriorate. In general, the particles should have an average diameter of less than 20 micrometers, preferably in the range of 0.05 to 5 micrometers, and most preferably in the range of 0.2 to 2 micrometers. For elongated particles, the long dimension should fit through the spinneret holes. Therefore, the average particle length of an elongated particle should be less than 20 micrometers, desirably is in the range of 0.05 to 5 micrometers, and preferably is in the range of 0.2 to 2 micrometers.

A minor percentage of the hard filler is used. The amount is chosen to yield enhanced cut resistance without causing a signficant loss of tensile properties. The cut resistance of the fiber or fabric made from the fiber is improved, preferably by at least 10%, using the Ashland Cut Protection Performance Test. Such tests as applied to fibers of liquid crystalline polymers are described in Example 3, and as applied to fibers of isotropic polymers are described in Example 4. The tensile properties of the fiber (tenacity and modulus) should not decrease more than about 50% and preferably will not decrease by more than about 25%. Most preferably, there will not be a significant change in tensile properties (i.e., less than about 10% decrease in properties). On a weight basis, the filler is present in an amount of 0.05% to 20%. On a volume basis, the amount of filler is typically in the range of about 0.01% to about 3%, preferably in the range of about 0.03% to about 1.5%, and more preferably in the range of about 0.05% to about 1%, with the proviso that the amount of filler is not greater than 20% on a weight basis. Thus, for a dense filler, such as tungsten powder in poly(ethylene terephthalate), the amount of filler corresponding to the volume percents stated above but expressed on a weight basis, is typically in the range of about 0.14% to about 20%, preferably in the range of about 0.42% to about 20%, and more preferably in the range of about 0.7% to about 14%. For PET, excellent properties are obtained with about 0.7% by volume of filler, corresponding to about 10% by weight when tungsten is the filler.

In accordance with the present invention, filled fibers are prepared from a filled resin. The filled resin is made by any of the standard methods for adding a filler to a resin. For example, for a thermoplastic polymer, the filled resin is conveniently prepared in an extruder by mixing the hard filler with molten polymer under conditions sufficient to provide a unifrom distribution of the filler in the resin. The filler may also be present during the manufacture of the polymer or may be added as the polymer is fed into the extruder of fiber spinning equipment, in which case the blending and spinning steps are nearly simultaneous. Any size fiber may be made according to the present invention. In the manufacture of fabrics and yarns, the fiber will generally have a denier per filament in the range of 1.1 to 55 dtex (1 to 50 dpf), preferably in the range of about 2.2 to about 22 dtex (2 to 20 dpf), and most preferably about 3.3 to about 16.5 dtex (3 to 15 dpf). Cut-resistant monofilaments may also be made by including a hard filler. Monofilaments generally have a diameter of about 0.05 to about 2mm. The fibers are made by conventional fiber spinning processes. The preferred process is melt- spinning, but wet-spinning and dry-spinning may also be used.

Cut-resistant fabric may be knit or otherwise made using a filled fiber in accordance with the present invention by using conventional methods and machinery. Such fabric will have improved cut resistance in comparison with the same fabric made using fiber manufactured from the same polymer without a filler. The cut resistance will be improved by at least 10% when measured using the Ashland Cut Protection Performance Test.

Cut-resistant apparel may then be made from the cut-resistant fabric described above. For example, a cut-resistant safety glove designed for use in the food processing industries may be manufactured from the fabric. Such a glove is highly flexible and readily cleanable. The filled fiber resists flexural fatigue. Protective medical gloves may also be made using the cut-resistant fibers of this invention. Other uses of the fabrics and monofilaments include side curtains and tarpaulins for trucks, softsided luggage, commercial upholstery, inflatables, fuel cells, collapsible packaging, airline cargo curtains, firehose sheaths, cut-resistant aprons for use in metal packing, and chaps.

Cut-resistant fiber materials described herein can also be substituted for unfilled polymeric fibers in cut-resistant fabrics, gloves and the like made by conventional methods to give even greater cut resistance. Thus, a cut-resistant fabric utilizing the filled fiber taught herein that is further reinforced by including a reinforcing inorganic fiber such as metal, glass or ceramic fiber, in accordance with current technology should have even greater cut resistance than the same fabric using a conventional fiber. Such fabrics may be made from composite yarns made up of strands of the filled fiber disclosed herein intermingled with strands of the metal, glass or ceramic reinforcing fiber. Alternatively, the reinforcing fiber may be present as a core surrounded by the cut-resistant fibers disclosed herein. Composite cut-resistant yarns of conventional fibers and reinforcing fibers are well known to practioners in the art and can readily be adapted to utilize the filled fibers taught herein as a substitute for conventional fibers.

Example 4.

Poly(ethylene terephthalate) fibers incorporating tungsten powder filler are described below. Tungsten has a Mohs Hardness value of about 6.5 to 7.5. Tire yarn grade poly(ethylene terephthalate) (PET), having an intrinsic viscosity of about 0.95 when measured in o-chlorophenol, is obtained from Hoechst Celanese Corporation, Somer- ville, New Jersey in the forms of pellets. A master batch is made by blending the polymer with 10% tungsten powder on a weight basis in a twin screw extruder. The tungsten has an average particle size of about 1 micrometer. The polymer pellets and tungsten are both dried before blending. The master batch is blended with additional PET in a twin screw extruder to yield blends having 1% and 4% tungsten on a weight basis. The samples are melt spun by forcing the molten blend first through a filter pack and then through a spinneret. The yarn is subsequently drawn off a heated feed roll at 90°C, then drawn over a heated shoe, and finally subjected to a 2% relaxation at 225°C. The yarn is plied for testing of properties. The data are summarized in Table 4. One of the 10% tungsten-loaded fibers is also analyzed for tungsten to ensure that the filler is not filtered out. The analysis of the fiber shows about 8.9% by weight tungsten in the fiber.

<u>Tensile properties.</u> The tenacity, elongation and modulus are measured using ASTM test method D-3822.

<u>Cut resistance.</u> The fiber is first knitted into fabric for the testing of cut resistance. The areal density of yarn in the fabric is measured in ounces/square yard (OSY in Tables 4 and 5). The cut resistance of the fabric is then measured using the Ashland Cut Performance Protection ("CPP") test. The test was carried out at TRI/Environmental, inc., 9063 Bee Cave Road, Austin, Texas 78733-6201. In the test, the fabric sample is placed on the flat surface of a mandrel. A series of tests is carried out in which a razor blade loaded with a variable weight is pulled across the fabric until the fabric is cut all the way through. The distance the razor blade travels across the cloth until the blade cuts completely through the cloth is measured. The point at which the razor blade cuts through the fabric is the point at which electrical contact is made between the mandrel and razor blade. The distance required to make the cut is plotted on a graph as a function of the load on the razor blade. The data are measured and plotted for cut distances varying from about 0.3 inches to about 1.8 inches. The resulting plot is approximately a straight line. An idealized straight line is drawn or calculated through the points on the plot, and the weight required to cut through the cloth after one inch of travel across the cloth is taken from the plot or calculated by regression analysis. The interpolated values of the weight required to make a cut after one inch of blade travel across the cloth are shown in Tables 4 and 5 as "CPP", an abbreviation for Cut Protection Performance. Finally, for purposes of comparing the data for different thicknesses of cloth sample, the CPP value is divided by the thickness of the cloth (OSY) to compensate for variations in cloth thickness. This value is shown as CPP/OSY in Tables 4 and 5. The cut resistance data for tungsten-filled PET fiber are presented in Table 4.

Example 5.

In these experiments, PET fiber samples are filled with alumina powder, which is sold commercially under the trademark MICROPOLISH® II as a polishing abrasive. Two different alumina powders are used having average particle sizes of about 0.05 micrometers and about 1.0 micrometers. Both are obtained as deagglomerated powders from Buehler, Ltd., Waukegan Road, Lake Bluff, Illinois 60044. The 0.05 micrometer alumina is gamma alumina with a cubic crystal structure and a Mohs Hardness Value of 8. The 1.0 micrometer material is alpha alumina having a hexagonal crystal structure and a Mohs Hardness Value of 9. The two alumina powders are blended with PET using the same method as in Example 4 to yield filled PET samples containing alumina at levels of about 0.21%, 0.86%, 1.9% and 2.1% by weight. Measurements of fiber properties and cut resistance are made using the same methods as in Example 4. The data are presented in Table 5.

The data in Tables 4 and 5 show that there is an improvement in cut resistance of at least about 10-20% at all levels of filler used. Both sets of data incorporate filler in the fiber at levels of about 0.07% to about 0.7% on a volume basis. The fiber properties do not appear to significantly degrade with these amounts and sizes of particles.

It is to be understood that the above described embodiments of the invention are illustrative only and that modification throughout may occur to one skilled in the art. Accordingly, this invention is not to be regarded as limited to the embodiments disclosed herein.

Table 4.

| Cut Resistance of PET Filled with Tungsten | | | | | | | |
|---|---|---|---|---|---|---|---|
| No. | % Tungsten Wt. Volume | Particle Size (micrometer) | dtex filament (dpf) | T/E/M[1] | CPP[2] | $g/m^2$ (OSY[3]) | CPP/ ($\frac{g}{m^2}$) (CPP/ OSY) |
| Control 1 | -- -- | -- | 3.4 (3.1) | (6.8/6.7/124) 6.1/6.7/110 | 421 | (7.1) 241 | (59) 1.7 |
| Control 2 | -- -- | -- | 5.9 (5.0) | -- | 384 | (6.8) 231 | (56) 1.7 |
| Control 3 | -- -- | -- | 5.9 (5.0) | -- | 589 | (13.0) 441 | (45) 1.3 |
| 4-1 | 1% 0.07% | 1 micrometer | 6.6 (6.0) | (6.3/9.0/128) 5.6/9.0/114 | 540 | (9.1) 308 | (59) 1.7 |
| 4-2 | 1% 0.07% | 1 micrometer | 6.2 (5.6) | | 565 | (7.3) 247 | (77) 2.3 |
| 4-3 | 4% 0.29% | 1 micrometer | 6.6 (6.0) | (7.2/11.6/109) 6.4/11.6/97 | 643 | (7.0) 237 | (92) 2.8 |
| 4-4 | 4% 0.29% | 1 micrometer | 6.9 (5.9) | (7.0/12.5/100) 6.2/12.9/89 | 620 | (7.3) 247 | (85) 2.5 |
| 4-5 | 10% 0.72% | 1 micrometer | 12.8 (11. 6) | (6.3/10.0/123) 5.6/10.0/109 | 697 | (7.5) 254 | (93) 2.7 |
| 4-6 | 10% 0.72% | 1 micrometer | (7.4) 8.1 | (4.1/22.9/75) 3.6/22.9/67 | 759 | (8.5) 288 | (90) 2.7 |
| 4-7 | 10% 0.72% | 1 mircometer | 6.6 (6.0) | -- | 670 | (7.5) 258 | (89) 2.6 |

[1]Tenacity cN/dtex ((gpd)), Elongation (%), Modulus cN/dtex ((gpd)). measured using ASTM test method D-3822.

[2]Cut Protection Performance, measured using the Ashland CPP test.

[3]Ounces per Square Yard.

Table 5.

| | Cut Resistance of PET Filled with Alumina | | | | | | | |
|---|---|---|---|---|---|---|---|---|
| No. | % Alumina | | Particle Size (micrometer) | dtex/ filament (dpf) | T/E/M[1] | CPP[2] | g/m2 (OSY[3]) | CPP/($\frac{g}{m^2}$) (CPP/OSY) |
| | Wt. | Volume | | | | | | |
| 5-1 | 0.21% | .07% | 1 micrometer | (11.4) 12.5 | (6.7/10.3/112) 8.0/10.3/100 | 547 | (7.2) 244 | (76) 2.2 |
| 5-2 | 0.21% | .07% | 1 micrometer | (56) 6.2 | (7.4/12.4/104) 6.6/12.4/93 | 463 | (7.5) 254 | (62) 1.8 |
| 5-3 | 0.86% | 0.30% | 0.05 micrometer | (5.6) 6.2 | (7.4/14.0/110) 6.6/14.0/98 | 501 | (7.3) 247 | (69) 2.0 |
| 5-4 | 0.86% | 0.30% | 0.05 micrometer | (5.7) 6.3 | (6.9/12.8/110) 6.1/12.8/98 | 497 | (6.7) 227 | (73) 2.2 |
| 5-5 | 1.9% | 0.67% | 1 micrometer | (11.8) 13.0 | (5.8/12.0/108) 5.7/12.0/96 | 683 | (8.2) 278 | (83) 2.4 |
| 5-6 | 1.9% | 0.67% | 1 micrometer | (5.6) 6.2 | (7.4/10.9/108) 6.6/10.9/96 | 478 | (6.7) 227 | (71) 2.1 |
| 5-7 | 2.1% | 0.74% | 0.05 micrometer | (5.4) 5.9 | (6.6/11.6/117) 5.9/11.6/104 | 496 | (6.7) 227 | (74) 2.2 |
| 5-8 | 2.1% | 0.74% | 0.05 micrometer | (5.9) 6.5 | (5.4/12.8/100) 4.8/12.8/89 | 431 | (6.2) 210 | (69) 2.0 |

[1]Tenacity cN/dtex ((gpd)) Elongation (%), Modulus cN/dtex ((gpd)), measured using ASTM test method D.3822.

[2]Cut Protection Performance, measured using the Ashland CPP test.

[3](Ounces per Square Yard)

**Claims**

1. A cut-resistant fiber comprising a non-elastic fiber-forming isotropic semicrystalline polymer, characterized as having a hard filler distributed uniformly in said fiber, said filler having a Mohs Hardness value greater than 3, said filler being present in an amount of 0.05% to 20% by weight; wherein said hard filler is selected from the group consisting of a powder having an average diameter less than 20 micrometers, an elongated particle having an average length less than 20 micrometers, and mixtures thereof; wherein said filler is included in sufficient amount to increase the cut resistance of said fiber by at least 10% as measured by the Ashland Cut Protection Performance Test compared with a fiber comprising said polymer without said filler.

2. A cut-resistant fiber as recited in Claim 1, wherein said fiber-forming polymer is a melt-processable isotropic semi-crystalline polymer selected from the group consisting of poly(alkylene terephthalates), poly(alkylene naphthalates), poly(arylene sulfides), aliphatic polyamides, aliphatic-aromatic polyamides, and polyesters of cyclohexanedimethanol and terephthalic acid.

3. A cut-resistant fiber as recited in Claim 2, wherein said fiber-forming polymer is a semicrystalline polymer selected from the group consisting of poly(ethylene terephthalate), poly(butylene terephthalate), poly(ethylene naphthalate), poly(phenylene sulfide), poly(1,4-cyclohexanedimethanol terephthalate), nylon-6, and nylon-66.

4. A cut-resistant fiber as recited in Claim 3, wherein said fiber-forming polymer is poly(ethylene terephthalate).

5. A cut-resistant fiber as recited in Claim 1 wherein said hard filler has a Mohs Hardness value greater than 6.5.

6. A cut-resistant fiber as recited in Claim 1 wherein said hard filler is selected from the group consisting of a powder having an average diameter in the range of 0.05 to 5 micrometers, an elongated particle having an average length in the range of 0.05 to 5 micrometers, and mixtures thereof.

7. A cut-resistant fiber as recited in any of Claim 6 wherein said hard filler is selected from the group consisting of a powder having an average diameter in the range of 0.2 to 2 micrometers, an elongated particle having an average length in the range of 0.2 to 2 micrometers and mixtures thereof.

8. A cut-resistant fiber as recited in Claim 1 wherein said hard filler is non-metal selected from the group consisting of metal oxides, metal carbides, metal nitrides, metal-sulfides, metal silicates, metal silicides, metal sulfates, metal phosphates, metal borides, and mixtures thereof, except that said hard filler is not titanium dioxide or silicon dioxide.

9. A cut-resistant fiber as recited in Claim 8, wherein said hard filler is alumina, and wherein said polymer is poly(ethylene terephthalate).

10. A cut-resistant fiber as recited in Claim 1 wherein said hard filler is a metal or metal alloy.

11. A cut-resistant fiber as recited in Claim 10, wherein said hard filler is a metal or metal alloy selected from the group consisting of iron, nickel, stainless steel, tungsten, and mixtures thereof.

12. A cut-resistant fiber as recited in Claim 11, wherein said hard filler is tungsten in an amount of 10% by weight, and wherein said fiber-forming polymer is poly(ethylene terephthalate).

13. A cut-resistant fiber as recited in Claim 1, wherein said fiber has a denier in the range of 1.1 to 55 dtex/filament (1 to 50 dpf).

14. A cut-resistant fiber as recited in Claim 1, wherein said fiber is a monofilament.

15. A composite yarn having improved cut resistance comprising the cut-resistant fiber of Claim 1 and a reinforcing inorganic fiber.

16. The composite yarn recited in Claim 15 wherein said reinforcing inorganic fiber is selected from the group consisting of metal fiber, ceramic fiber, and glass fiber.

17. A method of making cut-resistant fabric **characterized by** the steps of:

(a) making a uniform blend of a non-elastic fiber-forming isotropic semicrystalline polymer and 0.05% to 20% by weight of a hard filler having a Mohs Hardness value greater than 3, said hard filler being selected from the group consisting of a powder having an average diameter less than 20 micrometers, an elongated particle having an average length less than 20 micrometers, and mixtures thereof;

(b) spinning said uniform blend into a fiber or yarn; and

(c) fabricating said fiber or yarn into fabric having cut resistance increased by at least 10% as measured by the Ashland Cut Protection Performance Test in comparison with the same fabric made from said fiber-forming polymer without said hard filler, said fabric optionally comprising other thermoplastic fibers or reinforcing inorganic fibers selected from the group consisting of ceramic, metal and glass fibers.

18. The method as recited in Claim 17, wherein said fiber-forming polymer is a melt-processable isotropic semi-crystalline polymer selected from the group consisting of poly(alkylene terephthalates), poly(alkylene naphthalates), poly(arylene sulfides), aliphatic polyamides, aliphatic-aromatic polyamides, and polyesters of cyclohexanedimethanol and terephthalic acid.

19. The method as recited in Claim 18, wherein said fiber-forming polymer is a melt-processable semicrystalline polymer selected from the group consisting of poly(ethylene terephthalate), poly(butylene terephthalate), poly(ethylene naphthalate), poly(phenylene sulfide), poly(1,4-cyclohexanedimethanol terephthalate), nylon-6, and nylon-66.

20. The method as recited in Claim 19, wherein said fiber-forming polymer is poly(ethylene terephthalate).

21. The method as recited in any one of Claims 17 wherein said hard filler is a metal or metal alloy.

22. The method as recited in Claim 21, wherein said hard filler is selected from the group consisting of iron, steel, tungsten and nickel.

23. The method as recited in Claim 22, wherein said hard filler is tungsten.

24. The method as recited in Claim 23, whezein said fiber-forming polymer is poly(ethylene terephthalate) and said hard filler is tungsten in an amount of 10% by weight.

25. The method as recited in Claim 17, wherein said hard filler is a non-metal selected from the group consisting of metal oxides, metal carbides, metal nitrides, metal sulfides, metal silicates, metal silicides, metal sulfates, metal phosphates, metal borides, and mixtures thereof, except that said hard filler is not titanium dioxide or silicon dioxide.

26. The method as recited in Claim 25, wherein said hard filler is alumina.

27. The method as recited in Claim 26, wherein said fiber-forming polymer is poly(ethylene terephthalate) and said hard filler is alumina.

28. Cut-resistant fabric made by the method of Claims 17.

29. A yarn comprising the cut resistant fiber of Claim 1.

30. A cut-resistant safety glove comprising the yarn of Claim 29.


**Patentansprüche**

1. Schnittfeste Faser, die ein nichtelastisches faserbildendes isotropes semikristallines Polymer umfasst, **dadurch gekennzeichnet, dass** ein harter Füllstoff gleichmäßig in der Faser verteilt ist, wobei der Füllstoff einen Mohs-Härtewert von mehr als 3 hat, wobei der Füllstoff in einer Menge von 0,05 bis 20 Gew.-% vorhanden ist, wobei der harte Füllstoff aus der Gruppe ausgewählt ist, die aus einem Pulver mit einem mittleren Durchmesser von weniger als 20 µm, länglichen Teilchen mit einer mittleren Länge von weniger als 20 µm und Gemischen davon besteht, wobei der Füllstoff in einer ausreichenden Menge vorhanden ist, um die nach dem Ashland Cut Protection Performance Test gemessene Schnittfestigkeit der Faser gegenüber einer Faser, die das Polymer ohne den Füllstoff umfasst, um wenigstens 10% zu erhöhen.

2. Schnittfeste Faser gemäß Anspruch 1, wobei das faserbildende Polymer ein in der Schmelze verarbeitbares isotropes semikristallines Polymer ist, das aus der Gruppe ausgewählt ist, die aus Polyalkylenterephthalaten, Polyalkylennaphthalaten, Polyarylensulfiden, aliphatischen Polyamiden, aliphatisch-aromatischen Polyamiden und Polyestern von Cyclohexandimethanol und Terephthalsäure besteht.

3. Schnittfeste Faser gemäß Anspruch 2, wobei das faserbildende Polymer ein semikristallines Polymer ist, das aus der Gruppe ausgewählt ist, die aus Polyethylenterephthalat, Polybutylenterephthalat, Polyethylennaphthalat, Polyphenylensulfid, Poly-1,4-cyclohexandimethanolterephthalat, Nylon-6 und Nylon-66 besteht.

4. Schnittfeste Faser gemäß Anspruch 3, wobei es sich bei dem faserbildenden Polymer um Polyethylenterephthalat handelt.

5. Schnittfeste Faser gemäß Anspruch 1, wobei der harte Füllstoff einen Mohs-Härtewert von mehr als 6,5 hat.

6. Schnittfeste Faser gemäß Anspruch 1, wobei der harte Füllstoff aus der Gruppe ausgewählt ist, die aus einem Pulver mit einem mittleren Durchmesser im Bereich von 0,05 bis 5 µm, länglichen Teilchen mit einer mittleren Länge im Bereich von 0,05 bis 5 µm und Gemischen davon besteht.

7. Schnittfeste Faser gemäß Anspruch 6, wobei der harte Füllstoff aus der Gruppe ausgewählt ist, die aus einem Pulver mit einem mittleren Durchmesser im Bereich von 0,2 bis 2 µm, länglichen Teilchen mit einer mittleren Länge im Bereich von 0,2 bis 2 µm und Gemischen davon besteht.

8. Schnittfeste Faser gemäß Anspruch 1, wobei der harte Füllstoff ein Nichtmetall ist, das aus der Gruppe ausgewählt ist, die aus Metalloxiden, Metallcarbiden, Metallnitriden, Metallsulfiden, Metallsilicaten, Metallsiliciden, Metallsulfaten, Metallphosphaten, Metallboriden und Gemischen davon besteht, mit der Maßgabe, dass es sich bei dem harten Füllstoff nicht um Titandioxid oder Siliciumdioxid handelt.

9. Schnittfeste Faser gemäß Anspruch 8, wobei es sich bei dem harten Füllstoff um Aluminiumoxid und bei dem Polymer um Polyethylenterephthalat handelt.

10. Schnittfeste Faser gemäß Anspruch 1, wobei der harte Füllstoff ein Metall oder eine Metalllegierung ist.

11. Schnittfeste Faser gemäß Anspruch 1, wobei der harte Füllstoff ein Metall oder eine Metalllegierung ist, das bzw. die aus der Gruppe ausgewählt ist, die aus Eisen, Nickel, Edelstahl, Wolfram und Gemischen davon besteht.

12. Schnittfeste Faser gemäß Anspruch 11, wobei es sich bei dem harten Füllstoff um Wolfram in einer Menge von 10 Gew.-% und bei dem faserbildenden Polymer um Polyethylenterephthalat handelt.

13. Schnittfeste Faser gemäß Anspruch 1, wobei die Faser eine Feinheit im Bereich von 1,1 bis 55 dtex/Filament (1 bis 50 dpf) hat.

14. Schnittfeste Faser gemäß Anspruch 1, wobei die Faser ein Monofilament ist.

15. Verbundstoffgarn mit verbesserter Schnittfestigkeit, das die schnittfeste Faser gemäß Anspruch 1 und eine verstärkende anorganische Faser umfasst.

16. Verbundstoffgarn gemäß Anspruch 15, wobei die verstärkende anorganische Faser aus der Gruppe ausgewählt ist, die aus Metallfaser, Keramikfaser und Glasfaser besteht.

17. Verfahren zur Herstellung eines schnittfesten Textilstoffs, **gekennzeichnet durch** die folgenden Schritte:

(a) Herstellung eines gleichmäßigen Blends aus einem nichtelastischen faserbildenden isotropen semikristallinen Polymer und 0,05 bis 20 Gew.-% eines harten Füllstoffs mit einem Mohs-Härtewert von mehr als 3, wobei der harte Füllstoff aus der Gruppe ausgewählt ist, die aus einem Pulver mit einem mittleren Durchmesser von weniger als 20 µm, länglichen Teilchen mit einer mittleren Länge von weniger als 20 µm und Gemischen davon besteht;

(b) Verspinnen des gleichmäßigen Blends zu einer Faser oder einem Garn; und

(c) Verarbeiten der Faser oder des Garns zu einem Textilstoff mit einer nach dem Ashland Cut Protection Performance Test gemessenen Schnittfestigkeit, die im Vergleich zu demselben Textilstoff, der aus dem faserbildenden Polymer ohne den harten Füllstoff hergestellt wurde, um wenigstens 10% erhöht ist, wobei der Textilstoff gegebenenfalls noch weitere thermoplastische Fasern oder verstärkende anorganische Fasern, die aus der Gruppe ausgewählt sind, die aus Metallfaser, Keramikfaser und Glasfaser besteht, umfasst.

18. Verfahren gemäß Anspruch 17, wobei das faserbildende Polymer ein in der Schmelze verarbeitbares isotropes semikristallines Polymer ist, das aus der Gruppe ausgewählt ist, die aus Polyalkylenterephthalaten, Polyalkylennaphthalaten, Polyarylensulfiden, aliphatischen Polyamiden, aliphatisch-aromatischen Polyamiden und Polyestern von Cyclohexandimethanol und Terephthalsäure besteht.

19. Verfahren gemäß Anspruch 18, wobei das faserbildende Polymer ein semikristallines Polymer ist, das aus der Gruppe ausgewählt ist, die aus Polyethylenterephthalat, Polybutylenterephthalat, Polyethylennaphthalat, Polyphenylensulfid, Poly-1,4-cyclohexandimethanolterephthalat, Nylon-6 und Nylon-66 besteht.

20. Verfahren gemäß Anspruch 19, wobei es sich bei dem faserbildenden Polymer um Polyethylenterephthalat handelt.

21. Verfahren gemäß Anspruch 17, wobei der harte Füllstoff ein Metall oder eine Metalllegierung ist.

22. Verfahren gemäß Anspruch 21, wobei der harte Füllstoff aus der Gruppe ausgewählt ist, die aus Eisen, Stahl, Wolfram und Nickel besteht.

23. Verfahren gemäß Anspruch 22, wobei es sich bei dem harten Füllstoff um Wolfram handelt.

24. Verfahren gemäß Anspruch 23, wobei es sich bei dem faserbildenden Polymer um Polyethylenterephthalat und bei dem harten Füllstoff um Wolfram in einer Menge von 10 Gew.-% handelt.

25. Verfahren gemäß Anspruch 17, wobei der harte Füllstoff ein Nichtmetall ist, das aus der Gruppe ausgewählt ist, die aus Metalloxiden, Metallcarbiden, Metallnitriden, Metallsulfiden, Metallsilicaten, Metallsiliciden, Metallsulfaten, Metallphosphaten, Metallboriden und Gemischen davon besteht, mit der Maßgabe, dass es sich bei dem harten Füllstoff nicht um Titandioxid oder Siliciumdioxid handelt.

26. Verfahren gemäß Anspruch 25, wobei es sich bei dem harten Füllstoff um Aluminiumoxid handelt.

27. Verfahren gemäß Anspruch 26, wobei es sich bei dem faserbildenden Polymer um Polyethylenterephthalat und bei dem harten Füllstoff um Aluminiumoxid handelt.

28. Schnittfester Textilstoff, hergestellt nach dem Verfahren gemäß Anspruch 17.

29. Garn, das die schnittfeste Faser gemäß Anspruch 1 umfasst.

30. Schnittfester Sicherheitshandschuh, der das Garn gemäß Anspruch 29 umfasst.

**Revendications**

1. Fibre résistant à la coupe comprenant un polymère semicristallin isotrope formant une fibre non élastique, **caractérisée en ce qu'**elle comporte une charge dure répartie uniformément dans ladite fibre, ladite charge ayant une valeur de dureté Mohs supérieure à 3, ladite charge étant présente en une quantité de 0,05 % à 20 % en poids ; dans laquelle ladite charge dure est choisie dans le groupe constitué d'une poudre ayant un diamètre moyen inférieur à 20 micromètres, d'un article allongé ayant une longueur moyenne inférieure à 20 micromètres, et de mélanges de ceux-ci ; dans laquelle ladite charge est incluse en quantité suffisante pour augmenter la résistance à la coupe de ladite fibre d'au moins 10 % telle que mesurée par l'essai Ashland de performance de protection contre la coupe, en comparaison avec une fibre comprenant ledit polymère sans ladite charge.

2. Fibre résistant à la coupe selon la revendication 1, dans laquelle ledit polymère formant la fibre est un polymère semicristallin isotrope pouvant être traité à l'état fondu, choisi dans le groupe constitué des poly(téréphtalates d'alkylène), poly(naphtalates d'alkylène), poly(sulfures d'arylène), polyamides aliphatiques, polyamides aliphatiques-aromatiques et polyesters de cyclohexanediméthanol et d'acide téréphtalique.

3. Fibre résistant à la coupe selon la revendication 2, dans laquelle ledit polymère formant la fibre est un polymère semicristallin choisi dans le groupe constitué des poly(téréphtalate d'éthylène), poly(téréphtalate de butylène), poly(naphtalate d'éthylène), poly(sulfure de phénylène), poly(téréphtalate de 1,4-cyclohexane-diméthanol), Nylon 6 et Nylon 66.

4. Fibre résistant à la coupe selon la revendication 3, dans laquelle ledit polymère formant la fibre est du poly(téréphtalate d'éthylène).

5. Fibre résistant à la coupe selon la revendication 1, dans laquelle ladite charge dure a une valeur de dureté Mohs supérieure à 6,5.

6. Fibre résistant à la coupe selon la revendication 1, dans laquelle ladite charge dure est choisie dans le groupe constitué d'une poudre ayant un diamètre moyen dans la plage de 0,05 à 5 micromètres, d'un article allongé ayant une longueur moyenne dans la plage de 0,05 à 5 micromètres, et de mélanges de ceux-ci.

7. Fibre résistant à la coupe selon la revendication 6, dans laquelle ladite charge dure est choisie dans le groupe constitué d'une poudre ayant un diamètre moyen dans la plage de 0,2 à 2 micromètres, d'un article allongé ayant une longueur moyenne dans la plage de 0,2 à 2 micromètres et de mélanges de ceux-ci.

8. Fibre résistant à la coupe selon la revendication 1, dans laquelle ladite charge dure est un non-métal choisi dans le groupe constitué d'oxydes métalliques, de carbures métalliques, de nitrures métalliques, de sulfures métalliques, de silicates métalliques, de siliciures métalliques, de sulfates métalliques, de phosphates métalliques, de borures métalliques, et de mélanges de ceux-ci, sauf que ladite charge dure n'est pas du dioxyde de titane ou du dioxyde de silicium.

9. Fibre résistant à la coupe selon la revendication 8, dans laquelle ladite charge dure est de l'alumine, et dans laquelle ledit polymère est du poly(téréphtalate d'éthylène).

10. Fibre résistant à la coupe selon la revendication 1, dans laquelle ladite charge dure est un métal ou un alliage métallique.

11. Fibre résistant à la coupe selon la revendication 10, dans laquelle ladite charge dure est un métal ou un alliage métallique choisi dans le groupe constitué du fer, du nickel, de l'acier inoxydable, du tungstène et de mélanges de ceux-ci.

12. Fibre résistant à la coupe selon la revendication 11, dans laquelle ladite charge dure est du tungstène en quantité de 10 % en poids, et dans laquelle ledit polymère formant la fibre est du poly(téréphtalate d'éthylène).

13. Fibre résistant à la coupe selon la revendication 1, dans laquelle ladite fibre a un titre dans la plage de 1,1 à 55 dtex/filament (1 à 50 dpf).

14. Fibre résistant à la coupe selon la revendication 1, dans laquelle ladite fibre est un monofilament.

15. Fil composite ayant une résistance améliorée à la coupe comprenant la fibre résistant à la coupe de la revendication 1 et une fibre inorganique renforçante.

16. Fil composite selon la revendication 15, dans lequel ladite fibre inorganique renforçante est choisie dans le groupe constitué d'une fibre métallique, d'une fibre céramique et d'une fibre de verre.

17. Procédé de réalisation d'une étoffe résistant à la coupe, **caractérisé par** les étapes qui consistent :

   (a) à réaliser un mélange uniforme d'un polymère semicristallin isotrope de formation de fibre non élastique et de 0,05 % à 20 % en poids d'une charge dure ayant une valeur de dureté Mohs supérieure à 3, ladite charge dure étant choisie dans le groupe constitué d'une poudre ayant un diamètre moyen inférieur à 20 micromètres, d'un article allongé ayant une longueur moyenne inférieure à 20 micromètres et de mélanges de ceux-ci ;

(b) à filer ledit mélange uniforme en une fibre ou un fil ; et

(c) à fabriquer ladite fibre ou ledit fil en une étoffe ayant une résistance à la coupe augmentée d'au moins 10 % telle que mesurée par l'essai Ashland de performance de protection contre la coupe, en comparaison avec la même étoffe réalisée à partir dudit polymère de formation de fibre sans ladite charge dure, ladite étoffe comprenant facultativement d'autres fibres thermoplastiques ou d'autres fibres inorganiques renforçantes choisies dans le groupe constitué de fibres de céramique, de métal et de verre.

18. Procédé selon la revendication 17, dans lequel ledit polymère de formation de fibre est un polymère semicristallin isotrope pouvant être traité à l'état fondu, choisi dans le groupe constitué des poly(téréphtalates d'alkylène), poly(naphtalates d'alkylène), poly(sulfures d'arylène), polyamides aliphatiques, polyamides aliphatiques-aromatiques et polyesters de cyclohexanediméthanol et d'acide téréphtalique.

19. Procédé selon la revendication 18, dans lequel ledit polymère de formation de fibre est un polymère semicristallin pouvant être traité à l'état fondu, choisi dans le groupe constitué des poly(téréphtalate d'éthylène), poly(téréphtalate de butylène), poly(naphtalate d'éthylène), poly(sulfure de phénylène), poly(téréphtalate de 1,4-cyclohexanediméthanol), Nylon 6 et Nylon 66.

20. Procédé selon la revendication 19, dans lequel ledit polymère de formation de fibre est du poly(téréphtalate d'éthylène).

21. Procédé selon la revendication 17, dans lequel ladite charge dure est un métal ou un alliage métallique.

22. Procédé selon la revendication 21, dans lequel ladite charge dure est choisie dans le groupe constitué du fer, de l'acier, du tungstène et du nickel.

23. Procédé selon la revendication 22, dans lequel ladite charge dure est du tungstène.

24. Procédé selon la revendication 23, dans lequel ledit polymère de formation de fibre est du poly(téréphtalate d'éthylène) et ladite charge dure est du tungstène en quantité de 10 % en poids.

25. Procédé selon la revendication 17, dans lequel ladite charge dure est un non-métal choisi dans le groupe constitué d'oxydes métalliques, de carbures métalliques, de nitrures métalliques, de sulfures métalliques, de silicates métalliques, de siliciures métalliques, de sulfates métalliques, de phosphates métalliques, de borures métalliques, et de mélanges de ceux-ci, sauf que ladite charge dure n'est pas du dioxyde de titane ou du dioxyde de silicium.

26. Procédé selon la revendication 25, dans lequel ladite charge dure est de l'alumine.

27. Procédé selon la revendication 26, dans lequel ledit polymère de formation de fibre est du poly-(têréphtalate d'éthylène) et ladite charge dure est de l'alumine.

28. Etoffe résistant à la coupe produite par le procédé de la revendication 17.

29. Fil comprenant la fibre résistant à la coupe de la revendication 1.

30. Gant de sécurité résistant à la coupe comprenant le fil de la revendication 29.